# EUROPEAN PATENT APPLICATION

(11) **EP 2 219 184 A1**
(43) Date of publication of application: **18.08.2010**
(21) Application number: 09305128.2
(22) Date of filing: 12.02.2009
(51) Int. Cl.: G11B 7/0065, G03H 1/04

(54) **Demodulation of holographic data pages**

(71) Applicant: Thomson Licensing, 92130 Issy-les-Moulineaux (FR)
(72) Inventor: Malki, Oliver, 78176 Fuetzen (DE); Przygodda, Frank, 78050 Villlingen-Schwenningen (DE)
(74) Representative: Thies, Stephan

(57) **Abstract**

The present invention relates to a method for reading from an optical data storage medium (29) containing data in the form of data blocks (3), each data block (3) corresponding to one of a plurality of allowed block codes. A data image retrieved from the optical data storage medium (29) by a detector (42) is correlated with estimated block code images (31) expected at the detector (42)

## Description

The present invention relates to a method for reading from an optical data storage medium containing data in the form of data blocks, e.g. a holographic storage medium, and to an apparatus for reading from an optical storage medium comprising such data blocks.

The invention is described below using a holographic storage system as an example. The use of the invention within other optical storage systems using data pages is also covered by the invention.

In holographic data storage digital data are stored by encoding the interference pattern produced by the superposition of two coherent laser beams, where one beam, the so-called 'object-beam', is modulated by a spatial light modulator (SLM) and carries the information to be recorded. The second beam serves as a reference beam. The interference pattern leads to modifications of specific properties of the storage material, which depend on the local intensity of the interference pattern. Reading of a recorded hologram is performed by illuminating the hologram with the reference beam using the same conditions as during recoding. This results in the reconstruction of the recorded object beam, which can be retrieved by a detector.

One advantage of holographic data storage is an increased data capacity. Contrary to conventional optical storage media, the volume of the holographic storage medium is used for storing information, not just a single or few 2-dimensional layers. One further advantage of holographic data storage is the possibility to store multiple data in the same volume, e.g. by changing the angle between the two beams or by using shift multiplexing, etc. Furthermore, instead of storing single bits, data are stored as data pages. Typically a data page consists of a matrix of light-dark-patterns, i.e. a two dimensional binary array or an array of grey values, which code multiple bits. Data pages consisting of patterns showing different phases can also be used. This allows to achieve increased data rates in addition to the increased storage density. The data page is imprinted onto the object beam by the SLM and detected with a matrix array.

During readout a data image is retrieved from the optical data storage medium by a detector. Each data block, which is a part of the data page, has to be demodulated via an analysis of the detector image. The number of 'on' pixels and the arrangement of 'on' and 'off' pixels within a data block are defined by the coding scheme, the so-called block code. In a method for reading from an optical data storage medium containing data in the form of data blocks, each data block corresponds to one of a plurality of allowed blocks.

The detector image is usually influenced by the entire optical system. By transmitting the light through the optical system errors are added to the original data block, e.g. due to SLM artefacts, optical distortion, spatial filtering, misalignment or detector noise.

A known solution to cope with these errors and to demodulate the detector data correctly is to use a high spatial oversampling factor between the SLM and the detector. But coming along with this solution is a reduction of the data capacity per transmitted data page, which leads to a reduced data rate. Higher spatial oversampling reduces the light intensity per pixel and leads to a lower signal to noise ratio (SNR).

Using spatial oversampling, which means the ratio of detector samples compared to SLM pixels is greater than one, usually each block of the detector data has to be downsampled before it can be demodulated. Afterwards each block consisting of the transformed detector data is demodulated by determining that block of the complete set of data blocks building the coding scheme having the highest correlation with the downsampled block. In case of a 4x4-3 block code (a block of 4x4 pixels with 3 'on' pixels), for example, each downsampled detector data block has to be correlated to a set of 560 blocks. Sometimes the correlation is implemented via ranking methods in order to reduce the numerical complexity.

It is an object of the invention to propose a reading method for reading from an optical data storage medium, which employs a demodulation procedure requiring less numerical effort and leading to more reliable results.

According to the invention, the expected block images available at the detector are estimated in dependence of the plurality of allowed blocks on the data storage medium. The data image retrieved at the detector is correlated with the expected block images at the detector. The method is used to compensate the effects of the optical path. This has the advantage that transformations of the data block introduced by the optical path are compensated. The estimation of channel influences is performed blockwise, which has the advantage that it is more reliable than the estimation of channel influences for each pixel separately. This is due to the fact that the pixels in a block are correlated. Influences of the optical channel on a certain pixel also influence the neighbouring pixels. Using the inventive method, the amount of data per page that can be demodulated correctly is increased. This leads to a higher data rate, because fewer pixels within a data block need to be used for redundancy. Holographic data storage media storing more data within the same volume of storage material can be demodulated correctly. Therefore, the data capacity of the holographic media can be increased. The demodulation procedure is made more robust against any kind of distortion, noise, etc. which leads to a reduction of the light intensity needed per data page and, therefore, to a higher possible data page frequency. A higher robustness also leads to a lower required oversampling, which in turns allows a higher data rate and requires less numerical effort.

According to the invention, the method is used for reading from a holographic data storage medium. It is advantageous to use the method for storage systems using a block code, wherein different pixels within a data block are correlated. This advantage is realised in holographic storage systems.

According to the invention, the method takes oversampling effects into account while determining the expected block images. Alternatively or in addition, misalignment effects are also considered while determining the expected block images. Including oversampling and/or misalignment effects improves the overall accuracy of the determination of the block images expected at the detector.

According to the invention, for all allowed blocks in the block code the expected block images at the detector are estimated. This has the advantage that the inventive method is used for all allowed blocks. By estimating the expected block images in advance to the reading process, computational effort during the reading process itself can be reduced. Alternatively, the expected block images at the detector are estimated only for certain blocks within a block code, e.g. for frequently used blocks.

According to the invention, spatial filtering is taken into account during estimation of the detector images. This has the advantage of a reliable estimation of expected block images at the detector. For page oriented data storage, where the information is written into the medium in or close to the overlapping focus of the reference and object beam, spatial filtering is widely used to reduce the size of the hologram. This increases the storage capacity. In an optical system, spatial filtering is usually achieved by applying a so-called 4f system together with an aperture in the focal plane. Spatial filtering is achieved by Fourier transformation, filtering in the frequency domain, and back transformation to get the filtered image. By taking the specific spatial filtering for a given holographic system into account, the optical channel adaptation of the demodulation method is improved.

According to the invention, a multiple data blocks are arranged in the form of data pages. The data pages are stored in the optical data storage medium. Using the inventive method for compensating channel influences blockwise is advantageous in page oriented data storage, wherein a data page contains multiple data blocks. In general, compensating the channel influences pagewise is not realistic because this would result in a huge computational effort. By compensating the channel influences blockwise the correlation between neighbouring pixels are considered with feasible computational effort.

According to the invention, the image received at the detector is demodulated as being a block for which the estimated block image has the highest correlation with the image received at the detector. This has the advantage that in case no block code is clearly identified at the detector, the image received at the detector having the highest correlation with the estimated bock image expected at the detector is assumed to be present. Therefore, the image having the highest probability to be present at the detector is determined as being the original image. It is also within the scope of the invention to apply other criteria additionally to the correlation criteria, e.g. the probability that a certain data block is expected to occur in the data page. If an image received at the detector has a similar correlation to a first block and a second block, but the second block has a higher probability to occur at this position, the detector image is demodulated as the second block even it has a lower correlation than the first block.

According to the invention, an apparatus for reading from an optical data storage medium is adapted to perform a method according to the invention. The apparatus includes a source of light, emitting a light beam, a lens system focusing the light beam on an optical storage medium and a detector for receiving the light beam reflected by the optical storage medium. The correlation between the detector image and the estimated block images is performed by a processor.

For better understanding the invention shall now be explained in more detail in the following description with reference to the figures. It is understood that the invention is not limited to this exemplary embodiment and that specified features can also expediently be combined and/or modified without departing from the scope of the present invention.
Fig. 1 shows a typical data page for a 4x4-3 block code including sync marks
Fig. 2 shows the shift of a data block on the detector corresponding to the underlying detector grid
Fig. 3 shows the four surrounding symbols for calculation of a transformation via a linear weighted sum
Fig. 4 shows a data block using a 4x4-3 block code
Fig. 5 shows the data block of Fig. 4 transformed via a linear weighted sum
Fig. 6 shows a data block after spatial filtering with an infinite aperture
Fig. 7 shows the data block of Fig. 6 after spatial filtering with an aperture of 4
Fig. 8 shows the data block of Fig. 6 after spatial filtering with an aperture of 2
Fig. 9 shows the data block of Fig. 6 after spatial filtering with an aperture of 1
Fig. 10 shows the data block of Fig. 6 transformed via a linear weighted sum
Fig. 11 shows the data block of Fig. 9 transformed via a linear weighted sum
Fig. 12 shows an apparatus for reading from a holographic storage system

While reading a data page 1 of a holographic storage medium, the demodulation procedure usually consists of several steps. The first step is the determination of sync mark 2 positions distributed over the data page 1.

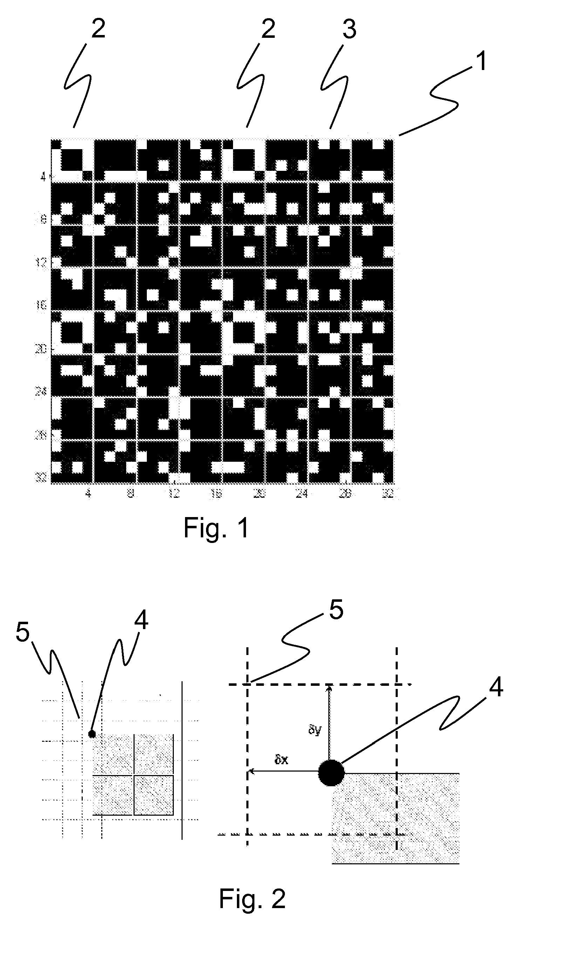

In Fig. 1 a part of a typical data page 1 using a 4x4-3 block code including sync marks 2 is displayed, where each data block 3 consists of three lighted symbols. Via the detection of the sync mark positions optical distortion and misalignment caused by the optical system are determined. According to the detected sync mark positions, a two-dimensional shift (δx, δy) is determined for each data block 3. Further, oversampling factors (σx, σy) are determined individually for each data block 3.

Fig. 2 shows the shift (δx, δy) of a data block 3 relative to the underlying detector grid 5. The upper left corner 4 of a data block 3 is shifted by (δx, δy) with regard to the corresponding corner of the detector grid 5. This misalignment varies from data block 3 to data block 3 and cannot be corrected by a simple shift of the whole data page 1.

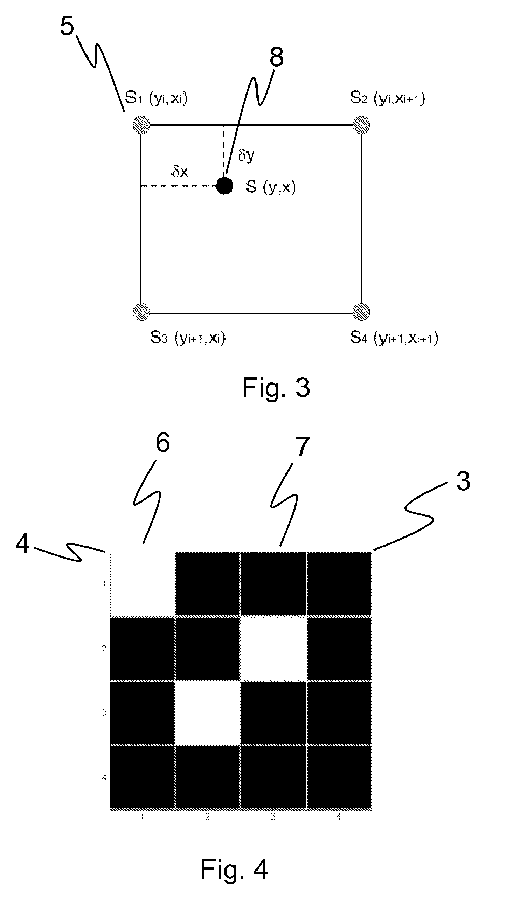

In Fig. 3 four surrounding symbols S1, S2, S3, S4 are displayed with respect to the upper left corner 8 of a block symbol (pixel) 6, 7 and the essential geometric parameters (δx, δy) needed for a transformation of the block symbol (pixel) to the respective detector grid 5 are shown. The transformation is a linear transformation, cubic splines, cubic convolution or another transformation method.

Fig. 4 shows a 4x4-3 coded data block 3. The data block 3 consists of three 'on' pixels 6 and thirteen 'off' pixels 7. As an example, the pixel in the first column of the first row, the pixel in the third column of the second row and the pixel in the second column of the third row are 'on' pixels 6.

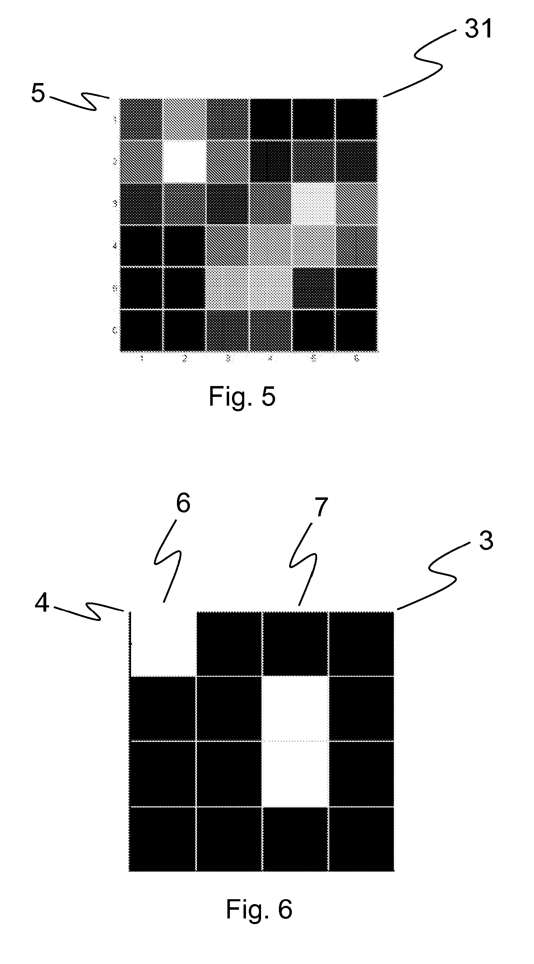

Fig. 5 shows the detector image 31 of the data block 3 given in Fig. 4, if the upper left corner 4 of the data block 3 is shifted by the values (δx, δy) with respect to the detector grid 5. The transformation parameters used in the example of Fig. 5 are δx=0.3, δy=0.4 for the shift between the detector grid and the image of the data block 3 on the detector. The oversampling factors of the detector used in this example are σx=1.5 and σy=1.5. Each block symbol (pixel) 6, 7 of Fig. 4 is transformed via a linear weighted sum of the surrounding four symbols as illustrated in Fig. 3.

After the transformation the resulting block 31 corresponds to the expected detector data for a specific shift (δx, δy) and scaling parameters (σx, σy) for a given data block 3 stored on the optical recording medium. The transformation is applied to all allowed data blocks 3 according to the employed block code. The data read by the detector is then correlated to the transformed data blocks 31. The transformed data block 31 having the highest correlation with the read out detector image is used and the corresponding block is assumed as being originally present in the storage medium. By determining the block as stored in the storage medium, demodulation of the data is performed.

In holographic data storage systems spatial filtering is a well known method to reduce noise, to increase data capacity and data rate. During demodulation, spatial filtering is taken into account by filtering the original data blocks 3 numerically e.g. via FFT or convolution and applying the transformation as described above. The original data blocks 3 are filtered corresponding to the optical transfer function in the holographic data storage system, e.g. by a numerical calculation. Generally a holographic data storage system uses coherent light sources. Therefore, the coherent imaging fundamentals are taken into account. Besides the spatial filtering the shift and scaling factors are used to transform these data blocks as it is described above. Fig. 6 corresponds to an original data block 3 or a data block 3, for which spatial filtered with an infinite aperture is calculated.

The filter aperture ξ=1 corresponds the Nyquist aperture D_{N} which is defined as D_{N} = λf/Γ, wherein λ is the wavelength, f is the focal length of the lens used in the optical filter and Γ is the pixel size of the SLM.

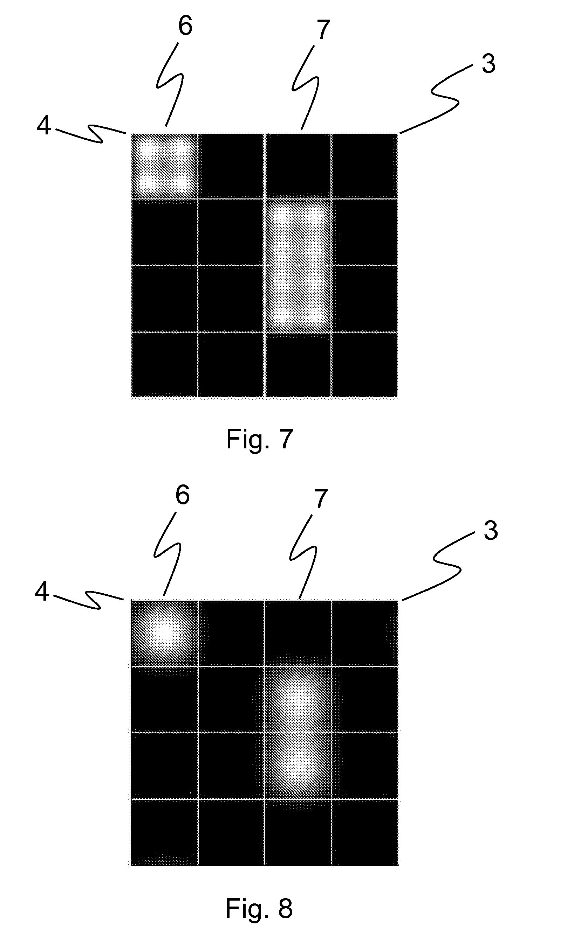

Fig. 7 shows the data block 3 of Fig. 6 after calculating effects of spatial filtering using an aperture ξ=4. This corresponds to four times the Nyquist aperture 4*D_{N}. Fig. 8 shows the data block 3 of Fig. 6 after calculating effects of spatial filtering using an aperture ξ=2. Fig. 8 shows the data block 3 of Fig. 6 after calculating effects of spatial filtering using an aperture ξ=1, which corresponds to the Niquist aperture.

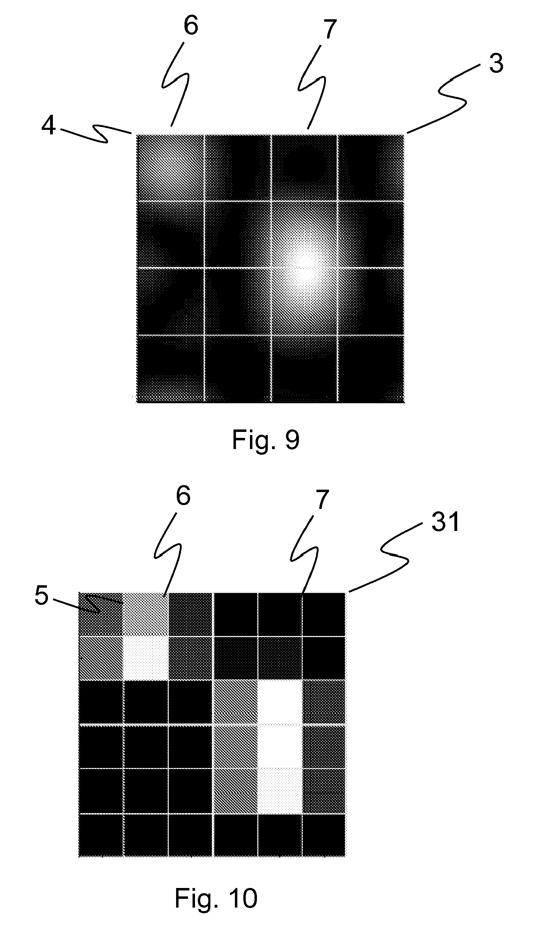

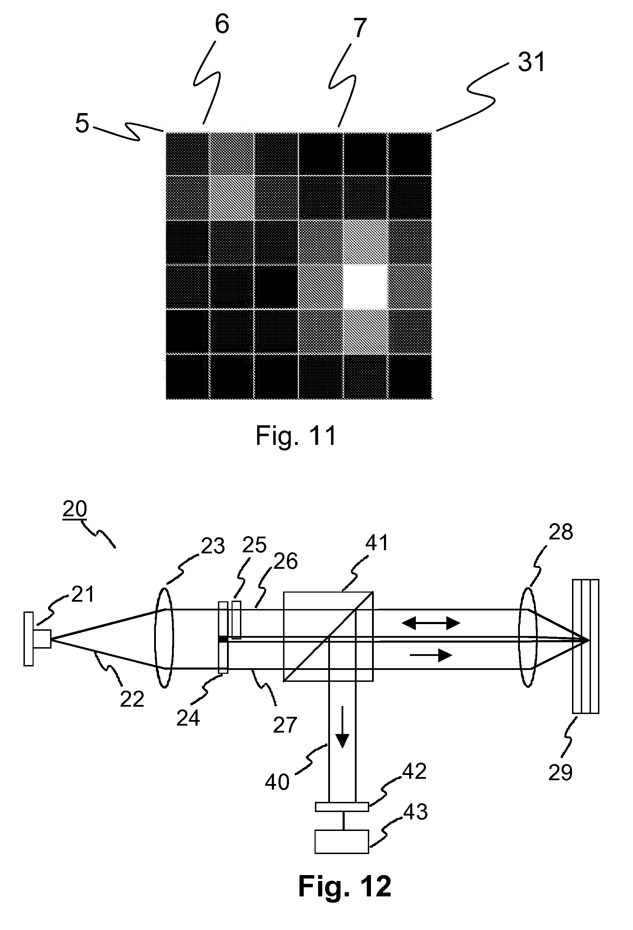

Fig. 10 shows the estimated detector image (31) of a block according to Fig. 6 after a transformation using the shift and scaling parameters δx=0.3, δy=0.4, σx =1.5 and σy=1.5. Fig. 11 shows the estimated detector image (31) of a block code according to Fig. 9, which corresponds to the block code shown in Fig. 6 after applying spatial filtering using an aperture of ξ=1, after a transformation using the shift and scaling parameters δx=0.3, δy=0.4, σx =1.5 and σy=1.5. Therefore, by comparing Fig. 10 and Fig. 11, the influence of spatial filtering can be recognised.

In Fig. 12 an apparatus 20 according to the invention for reading and/or recording a holographic storage medium 29 is shown schematically. A source of coherent light, e.g. a laser diode 21, emits a light beam 22, which is collimated by a collimating lens 23. The light beam 22 is then divided into two separate light beams 26, 27. In the example the division of the light beam 22 is achieved using a first beam splitter 24. However, it is likewise possible to use other optical components for this purpose. A spatial light modulator (SLM) 25 modulates one of the two beams, the so called "object beam" 26, to imprint a two-dimensional data pattern. Both the object beam 26 and the further beam, the so called "reference beam" 27, are focused into a holographic storage medium 29, e.g. a holographic disk or card, by an objective lens 28. At the intersection of the object beam 26 and the reference beam 27 an interference pattern appears, which is recorded in a photo-sensitive layer of the holographic storage medium 29.

The stored data are retrieved from the holographic storage medium 29 by illuminating a recorded hologram with the reference beam 27 only. The reference beam 27 is diffracted by the hologram structure and produces a copy of the original object beam 26, the reconstructed object beam 40. This reconstructed object beam 40 is collimated by the objective lens 28 and directed onto a two-dimensional array detector 42, e.g. a CCD-array, by a second beam splitter 41. The array detector 42 allows to reconstruct the recorded data. A processor 43 is provided to estimate the expected detector images dependent on the block code and for correlating estimated block code image and the received detector image.

## Claims

1. Method for reading from an optical data storage medium (29) containing data in the form of data blocks (3), each data block (3) corresponding to one of a plurality of allowed blocks, **wherein** a data image retrieved from the optical data storage medium (29) by a detector (42) is correlated with estimated block images (31) expected at the detector (42).

2. Method according to claim 1, **wherein** the optical data storage medium (29) is a holographic data storage medium (29).

3. Method according to claim 1 or 2, **wherein** the expected block images (31) take into account oversampling effects and/or misalignment effects.

4. Method according to one of the preceding claims, **wherein** the method is performed for all allowed blocks in the block code.

5. Method according to one of the preceding claims, **wherein** the expected block images take into account spatial filtering.

6. Method according to one of the preceding claims, **wherein** multiple data blocks (3) are arranged in the form of data pages (1) in the optical data storage medium (29).

7. Method according to one of the preceding claims, **wherein** the image received at the detector (31) is demodulated as being a block for which the estimated block image has the highest correlation with the image received at the detector (31).

8. Apparatus for reading from an optical data storage medium, **characterized in that** it is adapted to perform a method according to one of claims 1 to 7.
